# EUROPÄISCHE PATENTANMELDUNG

(11) **EP 4 503 403 A1**
(43) Veröffentlichungstag der Anmeldung: **05.02.2025**
(21) Anmeldenummer: 23189179.7
(22) Anmeldetag: 02.08.2023
(51) Int. Cl.: H02K 11/33, H02K 7/106, H02K 11/00

(54) **INTEGRIERTER WIDERSTAND IN EINEN ELEKTRONIKKÜHLKÖRPER**

(71) Anmelder: Hilti Aktiengesellschaft, 9494 Schaan (LI)
(72) Erfinder: Lacher, Michael, 86830 Schwabmünchen (DE); Scherbaum, Markus, 86853 Gennach (DE)
(74) Vertreter: Hilti Aktiengesellschaft Corporate Intellectual Property

(57) **Zusammenfassung**

Steuerungseinrichtung für einen Elektromotor, insbesondere als Antrieb für eine Werkzeugmaschine, enthaltend eine Leiterplatte, eine Kühlungseinrichtung sowie wenigstens ein Widerstandselement enthaltend wenigstens eine Aussparung an der Kühlungseinrichtung zum Aufnehmen wenigstens eines Widerstandselements.

## Beschreibung

Die vorliegende Erfindung betrifft eine Steuerungseinrichtung für einen Elektromotor, insbesondere als Antrieb für eine Werkzeugmaschine, enthaltend eine Leiterplatte, eine Kühlungseinrichtung sowie wenigstens ein Widerstandselement.

Aus dem Stand der Technik sind Elektromotoren zur Verwendung in Werkzeugmaschinen weitestgehend bekannt. Oftmals werden zum Abbremsen der Elektromotoren Bremswiderstände, sogenannte Bremschopper eingesetzt. Die Wärmeentwicklung und insbesondere der notwendige Wärmeabtransport dieser Widerstände stellen eine gewisse technische Herausforderung dar.

Bisher bekannte bzw. am Markt erhältliche Vorrichtungen zur Wärmeregulierung derartiger Widerstände sind für gewöhnlich teuer und auch komplex im Aufbau.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Steuerungseinrichtung für einen Elektromotor, insbesondere als Antrieb für eine Werkzeugmaschine, enthaltend eine Leiterplatte, eine Kühlungseinrichtung sowie wenigstens ein Widerstandselement.

Erfindungsgemäß ist vorgesehen, dass wenigstens eine Aussparung an der Kühlungseinrichtung enthalten ist zum Aufnehmen wenigstens eines Widerstandselements.

Gemäß einer alternativen Ausführungsform kann es möglich sein, dass die wenigstens eine Aussparung eine durchgehende Mantelfläche enthält.

Entsprechend einer weiteren alternativen Ausführungsform kann es möglich sein, dass die Kühlungseinrichtung wenigstens zwei Kühlelemente enthält und eine Aussparung durch zwei benachbarte Kühlelemente gebildet ist.

Gemäß einer weiteren alternativen Ausführungsform kann es möglich sein, dass die wenigstens eine Aussparung wenigstens teilweise mit einem Füllmaterial befüllt ist.

Entsprechend einer weiteren alternativen Ausführungsform kann es möglich sein, dass das Füllmaterial wenigstens teilweise als Duroplast oder keramischer Mörtel ausgestaltet ist.

Gemäß einer weiteren alternativen Ausführungsform kann es möglich sein, dass das wenigstens eine Widerstandselement als Hochlastwiderstand ausgestaltet ist.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf eine Werkzeugmaschine;
- Figur 2: eine schematische Ansicht auf einen Elektromotor verbunden mit einer Steuerungseinrichtung für den Elektromotor mit einer Leiterplatte, einer Kühlungseinrichtung und einem Widerstandselement gemäß einem ersten Ausführungsbeispiel;
- Figur 3: eine perspektivische Ansicht auf die Steuerungseinrichtung für den Elektromotor mit der Leiterplatte, der Kühlungseinrichtung und dem Widerstandselement gemäß dem ersten Ausführungsbeispiel;
- Figur 4: eine weitere perspektivische Ansicht auf die Steuerungseinrichtung für den Elektromotor mit der Leiterplatte, der Kühlungseinrichtung und dem Widerstandselement gemäß einem zweiten Ausführungsbeispiel; und

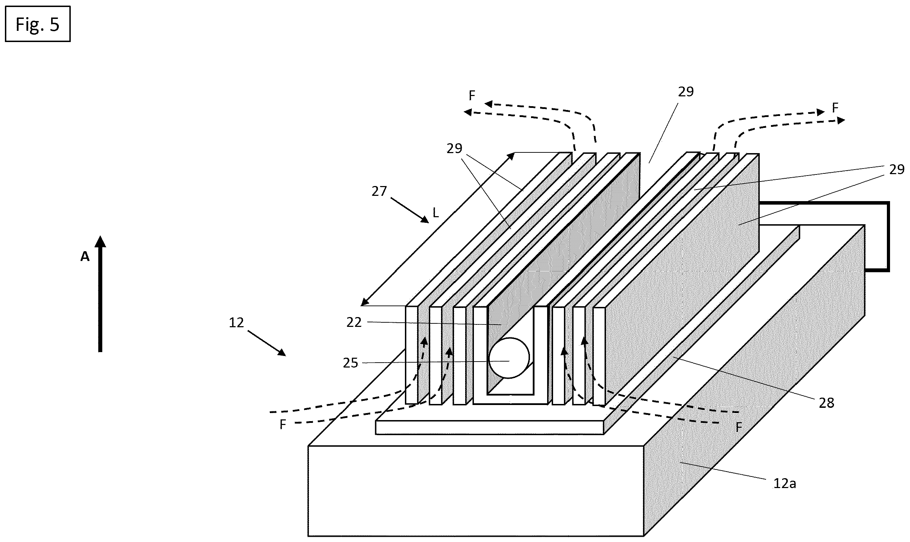

- Figur 5: eine zusätzliche perspektivische Ansicht auf die Steuerungseinrichtung für den Elektromotor mit der Leiterplatte, der Kühlungseinrichtung und dem Widerstandselement gemäß einem dritten Ausführungsbeispiel.

### Ausführungsbeispiele:

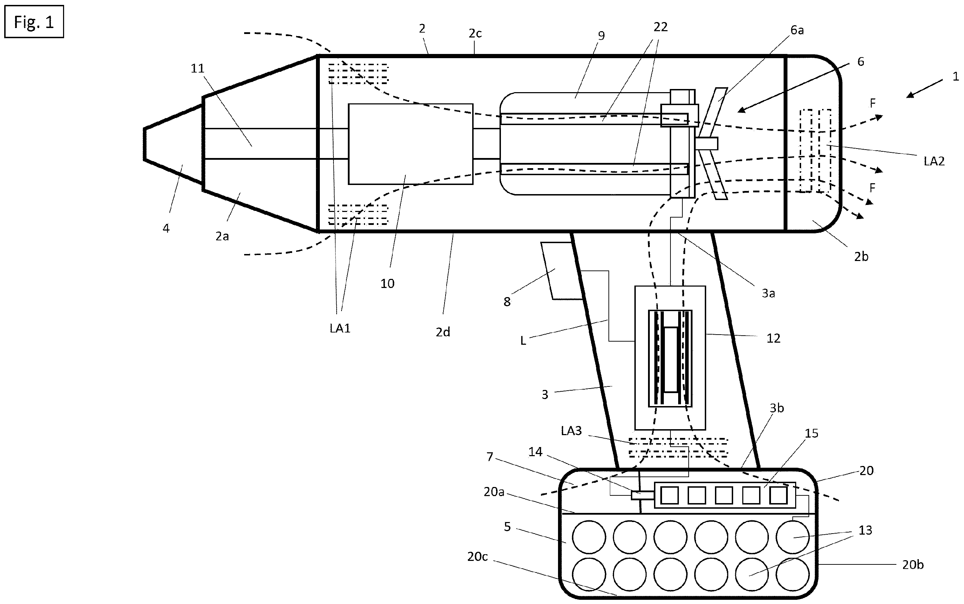

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs. In den Figuren ist das Werkzeug nicht dargestellt.

In dem vorliegenden Ausführungsbeispiel kann das Werkzeug in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Akku-Schnittstelle 7 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Akku-Schnittstelle 7 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11, eine Lüftungseinrichtung 6 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann.

Die Steuereinrichtung 12 ist mittels entsprechenden Leitungen L mit dem Aktivierungsschalter 8, der Akku-Schnittstelle 7 und dem Elektromotor 9 verbunden.

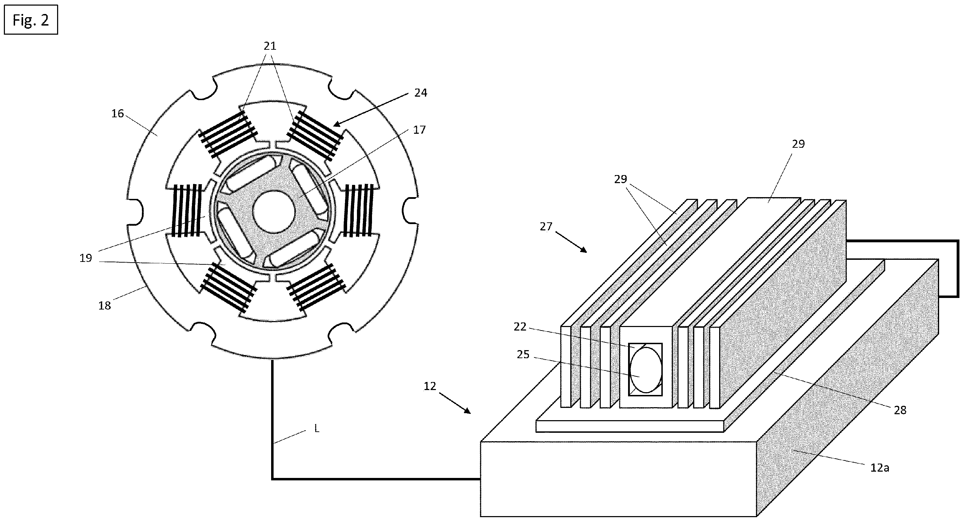

Der Elektromotor 9 ist in Form eines bürstenlosen Elektromotors ausgestaltet und enthält im Wesentlichen einen Stator 16 sowie einen Rotor 17, vgl. Figur 2.

Der Stator 16 enthält ein Statorblechpaket 18 mit vier radial nach innen gerichtete Polzähne 19. Das Statorblechpaket 18 besteht im Wesentlichen aus einer Anzahl an übereinander gestapelten Profilblechen.

Es sind jeweils zwei Polzähne 19 einander gegenüber positioniert. Gemäß einer alternativen Ausführungsform können auch mehr als vier Polzähne 19 vorgesehen sein. Die Polzähne 19 dienen zum jeweiligen Aufnehmen einer Spulendrahts 21 zum Erzeugen einer Spule 24. Die Spulen 24 sind entsprechend über die Steuereinrichtung 12 mit der Energieversorgung 5 verbunden, um eine elektrische Spannung an die Spulen 24 anzulegen. Mit anderen Worten: die Spulen 24 werden bestromt. Mit Hilfe der Spulen 24 wird ein abwechselndes Magnetfeld erzeugt, durch welches der Rotor 17 gedreht wird.

An einem hinteren Ende des Stators 16 ist die Lüftungseinrichtung 6 in Form eines Lüfterrads 6a so positioniert, dass das Lüftungsrad 6a durch den Rotor 17 angetrieben wird. Wie in Figur 1 angedeutet, sind an dem vorderen Ende 2a des Gehäuses 2 Lüftungseinlässe LA1 und an dem hinteren Ende 2b des Gehäuses 2 Lüftungsauslässe LA2 vorgesehen. Wenn das Lüfterrad 6a durch den Rotor 17 angetrieben ist, wird ein Lüftungsstrom F durch das Gehäuse 2 erzeugt zum Abtransport einer Abwärme an der Oberfläche des Stators 16.

Darüber hinaus befinden weitere Lüftungseinlässe LA3 an dem zweiten Ende 3b des Handgriffs 3. Ein Lüftungsstrom F strömt ebenfalls durch die Lüftungseinlässe LA3 in das Innere des Gehäuses 2 und tritt durch die Lüftungsauslässe LA2 wieder aus dem Gehäuse 2 heraus. Dieser zusätzliche Lüftungsstrom F strömt zum Kühlen über die Steuereinrichtung 12, wenn das Lüfterrad 6a durch den Rotor 17 angetrieben ist.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

Wie in den Figuren 2 bis 4 gezeigt, enthält die Steuerungseinrichtung 12 eine Leiterplatte 12a, auf der in Pfeilrichtung A eine Kühlungseinrichtung 27 positioniert ist. Die Kühlungseinrichtung 27 dient zum Kühlen bzw. für einen Wärmeabtransport an der Leiterplatte 12a der Steuerungseinrichtung 12.

Hierzu enthält die Kühlungseinrichtung 27 im Wesentlichen eine Grundplatte 28 und eine Anzahl an Kühlelementen 29. Die Kühlelemente 29 sind dabei in Pfeilrichtung A bzw. im Wesentlichen senkrecht zu der Grundplatte 28 angeordnet.

In den vorliegenden Ausführungsbeispielen sind die Kühlelemente 29 als voneinander beabstandete Kühlrippen ausgestaltet, sodass zwischen jeweils zwei benachbarte Kühlelemente 29 ein Lüftungsstrom F strömen kann.

Wie in Figur 2 gezeigt enthält die Kühlungseinrichtung 27 eine Aussparung 22 zum Aufnehmen und Halten eines Widerstandselements 25.

Wenn die Drehgeschwindigkeit des Rotors 17 relativ zu dem Stator 16 reduziert oder der Rotor 17 sogar komplett gestoppt werden soll, muss mit Hilfe eines Bremsvorgang der Rotor 17 gebremst werden. Beim Bremsen des Rotors 17 wird an den Spulen 24 des Stators 16 eine elektrische Spannung induziert. Durch die Verbindung der Spulen 24 über Leitungen L mit den jeweiligen Widerstandselementen 25, kann die induzierte elektrische Spannung in den Widerstandselementen 25 in Wärme umgewandelt werden.

Die Aussparung 22 kann auch als Vertiefung, Rinne, Nut oder Kavität bezeichnet werden. Die Aussparung 22 befindet sich dabei innerhalb eines Kühlelements 29, welches breiter als die übrigen Kühlelemente 29 ist.

Die Aussparung 22 ist gemäß eines ersten Ausführungsbeispiels mit einer rechteckigen Querschnittsfläche ausgestaltet und erstreckt sich dabei über die gesamte Länge L der Kühlelemente 29.

Das Widerstandselement 25 weist entsprechend dem ersten Ausführungsbeispiel eine zylindrische Form mit einer runden Querschnittsfläche auf.

Wenn sich dieses Widerstandselement 25 in der Aussparung 22 befindet, liegt die Außenmantelfläche des Widerstandselements 25 nicht vollständig, sondern nur punktuell, an der Innenmantelfläche der Aussparung 22 an. Zwischen der Außenmantelfläche des Widerstandselements 25 und der Innenmantelfläche der Aussparung 22 befinden sich Freiräume FR, durch welche ein Lüftungsstrom F zum Kühlen des Widerstandselements 25 strömen kann.

Gemäß alternativer Ausführungsbeispiele kann die Aussparung 22 auch andere Querschnittsflächen, wie z.B. (kreis)rund, aufweisen. Des Weiteren ist es auch möglich, dass das Widerstandselement 25 keine runde Querschnittsfläche aufweist, sondern eine nahezu identische Querschnittsfläche wie die Aussparung 22 enthält, sodass sich die Außenmantelfläche des Widerstandselements 25 nahe vollständig an der Innenmantelfläche der Aussparung 22 anliegt.

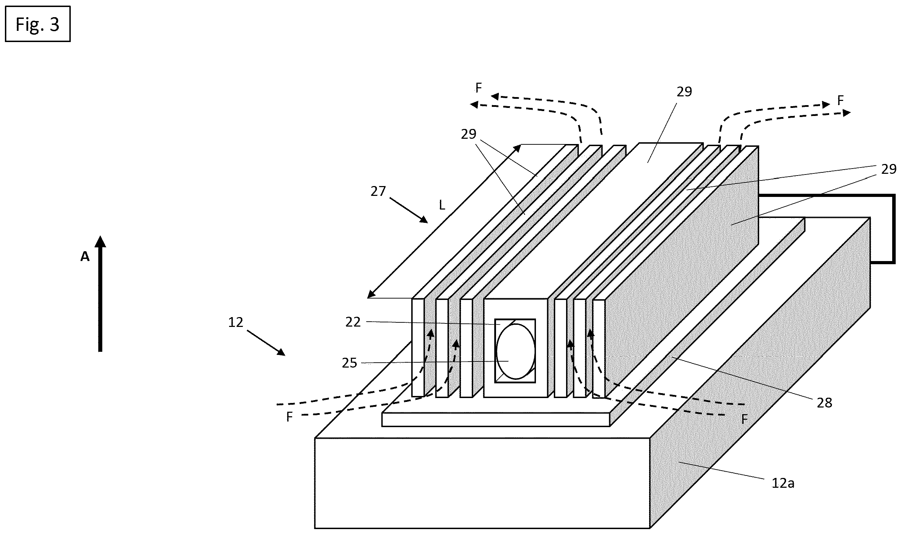

In Figur 3 ist die Aussparung gemäß einem zweiten Ausführungsbeispiel gezeigt, wobei die Aussparung 22 gemäß dem zweiten Ausführungsbeispiel im Wesentlichen identisch zu der Aussparung 22 gemäß dem ersten Ausführungsbeispiel ausgestaltet ist. Im Gegensatz zu dem ersten Ausführungsbeispiel ist die Aussparung 22 um das Widerstandselement 25 mit einem Füllmaterial FM befüllt. In dem vorliegenden Ausführungsbeispiel ist das Füllmaterial FM in Form eines Duroplasts ausgestaltet. Alternativ kann das Füllmaterial FM auch als keramischer Mörtel ausgestaltet sein. Das Füllmaterial FM dient zum Fixieren des Widerstandselements 25 in einer Aussparung 22. Das Füllmaterial FM kann auch als Verbindungsmaterial bezeichnet werden und kann als Duroplast ausgebildet sein.

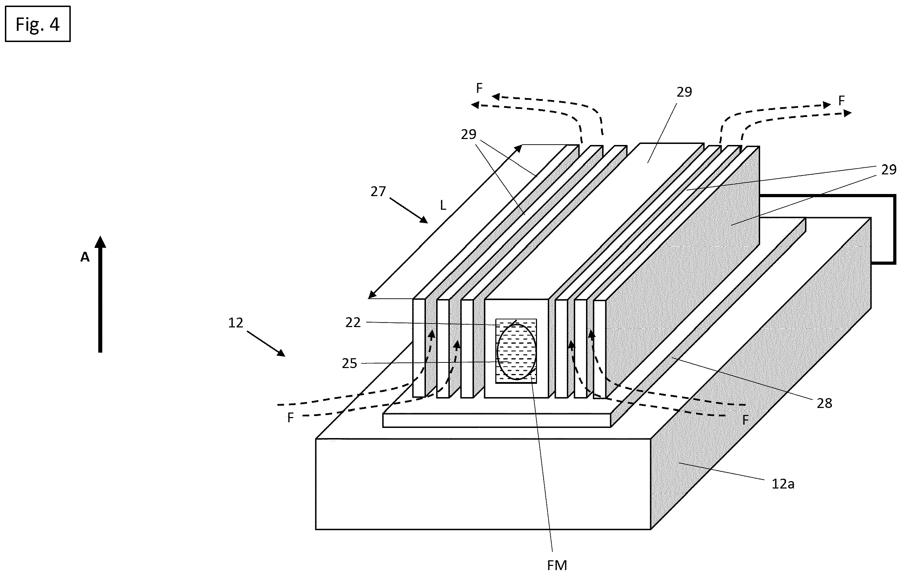

In Figur 4 ist die Aussparung 22 gemäß einem dritten Ausführungsbeispiel gezeigt, wobei die Aussparung 22 gemäß dem dritten Ausführungsbeispiel in Pfeilrichtung A geöffnet ist.

Gemäß einem weiteren Ausführungsbeispiel kann das Widerstandselement 25 als stromleitenden Draht in Form einer Kurve oder eines Bogens ausgestaltet sein.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Werkzeug
- 7: Akku-Schnittstelle
- 8: Aktivierungsschalter
- 9: Antrieb
- 10: Getriebevorrichtung
- 11: Antriebswelle
- 12: Steuerungseinrichtung
- 12a: Leiterplatte
- 13: Energiespeicherzellen
- 14: Akku-Schnittstelle
- 15: Steuerungseinrichtung
- 16: Stator
- 17: Rotor
- 18: Statorblechpaket
- 19: Polzahn
- 20: Akku-Gehäuse
- 21: Spulendraht
- 22: Aussparung
- 24: Spule
- 25: Widerstandselement
- 27: Kühlungseinrichtung
- 28: Grundplatte
- 29: Kühlelement

- FM: Füllmaterial
- LA1: Lüftungseinlass
- LA2: Lüftungsauslass
- LA3: weiterer Lüftungseinlass
- F: Lüftungsstrom
- L: Länge des Kühlelements

## Patentansprüche

1. Steuerungseinrichtung (12) für einen Elektromotor (9), insbesondere als Antrieb () für eine Werkzeugmaschine (), enthaltend eine Leiterplatte (12a), eine Kühlungseinrichtung (27) sowie wenigstens ein Widerstandselement (25),
**dadurch gekennzeichnet, dass** wenigstens eine Aussparung (22) an der Kühlungseinrichtung (27) enthalten ist zum Aufnehmen wenigstens eines Widerstandselements (25).

2. Steuerungseinrichtung (12) nach Anspruch 1,
**dadurch gekennzeichnet, dass** die wenigstens eine Aussparung (22) eine durchgehende Mantelfläche enthält.

3. Steuerungseinrichtung (12) nach Anspruch 1,
**dadurch gekennzeichnet, dass** die Kühlungseinrichtung (29) wenigstens zwei Kühlelemente (29) enthält und eine Aussparung (22) durch zwei benachbarte Kühlelemente (29) gebildet ist.

4. Steuerungseinrichtung (12) nach wenigstens einem der Ansprüche 1 bis 3,
**dadurch gekennzeichnet, dass** die wenigstens eine Aussparung wenigstens teilweise mit einem Füllmaterial (FM) befüllt ist.

5. Steuerungseinrichtung (12) nach Anspruch 4,
**dadurch gekennzeichnet, dass** das Füllmaterial (FM) wenigstens teilweise als Duroplast oder keramischer Mörtel ausgestaltet ist.

6. Steuerungseinrichtung (12) nach wenigstens einem der Ansprüche 1 bis 5,
**dadurch gekennzeichnet, dass** das wenigstens eine Widerstandselement (25) als Hochlastwiderstand ausgestaltet ist.
